# EUROPÄISCHE PATENTANMELDUNG

(11) **EP 1 310 725 A2**
(43) Veröffentlichungstag der Anmeldung: **14.05.2003**
(21) Anmeldenummer: 02024337.4
(22) Anmeldetag: 02.11.2002
(51) Int. Cl.: F16M 5/00

(54) **Grundrahmen und dessen Verwendung**

(30) Priorität: 12.11.2001 DE 10155566
(71) Anmelder: InfraServ GmbH & Co. Höchst KG, 65926 Frankfurt am Main (DE)
(72) Erfinder: Dornick, Stefan, 65529 Waldems 2 (DE); Bestehorn, Harald, 60529 Frankfurt (DE)
(74) Vertreter: Ackermann, Joachim, Dr.

(57) **Zusammenfassung**

Beschrieben wird ein Grundrahmen umfassend eine volltragende und durchgehend ebene Montageplatte (1), sowie eine Rahmenkonstruktion (2) aus miteinander verbundenen Profilstangen (3), deren Abmessung in etwa der Abmessung der Montageplatte (1) entspricht, und gegebenenfalls eine Bodenplatte (4), wobei die Montageplatte (1) mit der Rahmenkonstruktion (2) in einer solchen Weise verbunden ist, dass keine Flüssigkeit zwischen Montageplatte (1) und Rahmenkonstruktion (2) eindringen kann.

Der Grundrahmen lässt sich insbesondere zur Montage von Pumpen verwenden, die zum Einsatz in Sterilbereichen vorgesehen sind.

## Beschreibung

### Grundrahmen und dessen Verwendung

Die vorliegende Erfindung betrifft einen Grundrahmen, der sich insbesondere zur Montage von Pumpen verwenden lässt.

Grundrahmen für die Montage von Pumpen sind allgemein üblich. Die bekannten Grundrahmen bestehen üblicherweise aus einer Montageplatte, die auf einer Rahmenkonstruktion angebracht ist. Bislang kommen Montageplatten zum Einsatz, die Öffnungen aufweisen und/oder die Vertiefungen zur Aufnahme von Flüssigkeiten aufweisen.

Derartige Konstruktionen sind schlecht oder gar nicht zu reinigen und eignen sich daher nur eingeschränkt zum Einsatz in Sterilbereichen. Insbesondere in der pharmazeutischen Industrie ist der Bedarf nach Vorrichtungen groß, die in Sterilbereichen eingesetzt werden können und die wartungsarm oder wartungsfrei sind.

Ferner lassen sich erfindungsgemäß Grundrahmen herstellen, bei denen die bislang üblichen Gusswerkstoffe in einfacher Art und Weise durch andere Werkstoffe ersetzt werden können. Diese Grundrahmen lassen sich daher auch in Bereichen einsetzen, in denen Platten in Gusswerkstoffen nicht zugelassen sind.

Ausgehend von den bekannten Vorrichtungen wird mit der vorliegenden Erfindung ein Grundrahmen zur Verfügung gestellt, der aus unterschiedlichen Materialien zusammengesetzt sein kann, der den Anforderungen der Steriltechnik besonders gut genügt und der auf einfache Art und Weise zu reinigen ist.

Die vorliegende Erfindung betrifft einen Grundrahmen umfassend
a) eine volltragende und durchgehend ebene Montageplatte (1), und
b) eine Rahmenkonstruktion (2) aus miteinander verbundenen Profilstangen (3), deren Abmessung in etwa der Abmessung der Montageplatte (1) entspricht, wobei
c) die Montageplatte (1) mit der Rahmenkonstruktion (2) in einer solchen Weise verbunden ist, dass keine Flüssigkeit zwischen Montageplatte (1) und Rahmenkonstruktion (2) eindringen kann.

Die Montageplatte (1) ist volltragend und eben ausgestaltet. Darunter ist zu verstehen, dass diese eine ausreichende mechanische Stabilität aufweist, um die darauf anzubringenden Vorrichtungen, wie Pumpen, zu tragen und dass diese keine Vertiefungen, Erhebungen oder Unterbrechungen aufweist.

Die Montageplatte besteht vorzugsweise aus Edelstahl, insbesondere aus Werkstoff 1.4301, 1.4541 und 1.4571 mit einer Rauheit von jeweils Ra = 3,2 µm.

Die Rahmenkonstruktion (2) besteht im allgemeinen aus Profilstangen beliebigen Profils, vorzugsweise U-Profils. Die Profilstangen bestehen vorzugsweise aus Edelstahl.

Die Abmessung der Rahmenkonstruktion (2) entspricht in etwa der Abmessung der Montageplatte (1); darunter ist zu verstehen, dass die Außenwände der Rahmenkonstruktion durch vier Profilstangen gebildet wird, wobei die von diesen Profilstangen umschlossene Fläche in etwa der Fläche der Montageplatte entspricht.

Die Verbindung der Profilstangen untereinander zur Rahmenkonstruktion (2) kann auf beliebige Weise erfolgen, vorzugsweise jedoch durch Verschweißen. Dadurch kann auf einfache Art und Weise sichergestellt werden, dass die Rahmenkonstruktion (2) nach außen flüssigkeitsdicht ist.

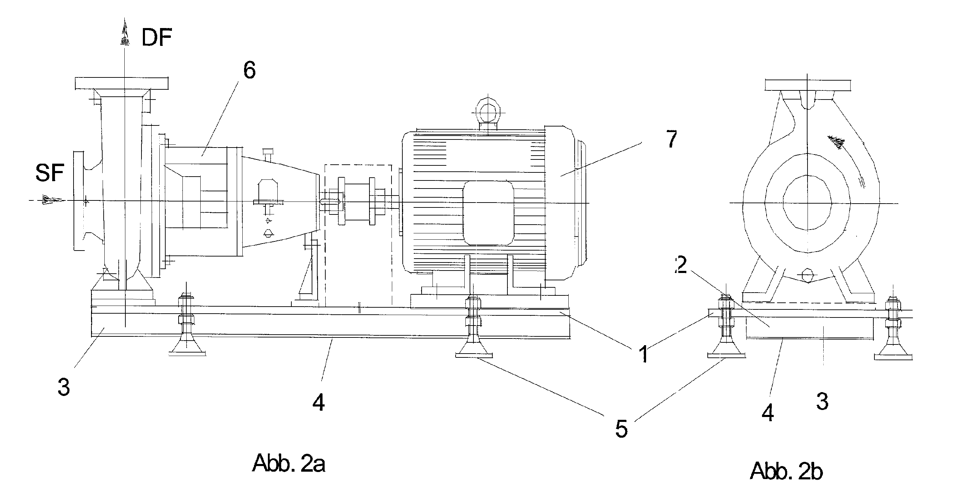

Bevorzugt werden Rahmenkonstruktionen (2) aus U-Profilstangen verwendet, bei denen die Schenkel des U-Profils der den äußeren Rahmen bildenden Profilstangen nach außen weisen (vergl. Abbildung 2).

Dieser nach außen offene U-Rahmen gewährleistet durch die Einschrägungen ein optimales Abfließen von Flüssigkeiten und ferner ist eine optimale Reinigung der Konstruktion möglich.

Die durchgehende und fiussigkeitsdicht mit der Rahmenkonstruktion verbundenen Montageplatte (1) gewährleistet, dass auf der Montageoberfläche keine Toträume oder Spalte vorliegen, in denen sich Flüssigkeiten ansammeln und nur schwer zu entfernen sind.

In der Ausführungsform der Sandwichbauweise (Montageplatte / Rahmenkonstruktion / Bodenplatte) ist sichergestellt, dass keine Stoffe von der Unterseite in den Rahmen eindringen bzw. sich in Toträumen festsetzen können.

Ohne die Anwesenheit der Bodenplatte wird die Rahmenkonstruktion (2) des Grundrahmens vorzugsweise aus geschlossenen Rund- oder Vierkantrohren gebildet.

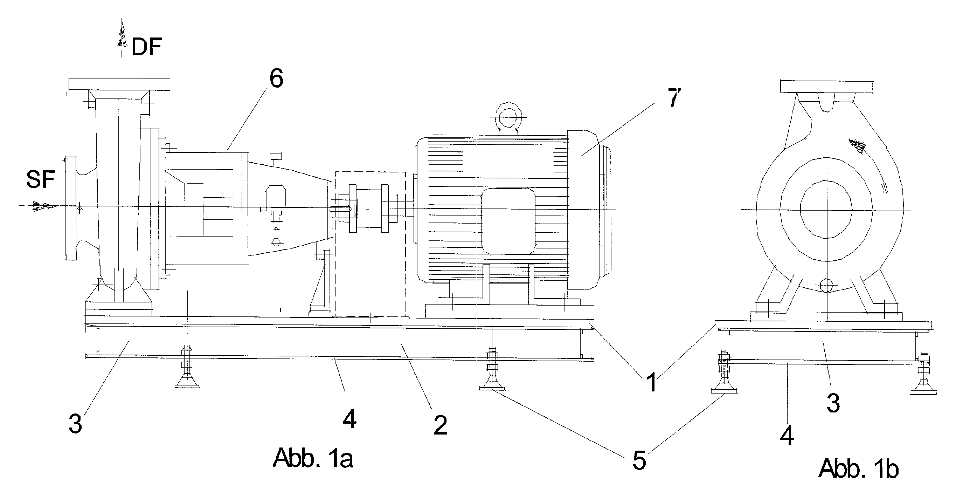

In einer ebenfalls bevorzugten Ausführungsform des erfindungsgemäßen Grundrahmens werden Rahmenkonstruktionen (2) aus U-Profilstangen verwendet, bei denen die Schenkel des U-Profils zumindest der den äußeren Rahmen bildenden Profilstangen, vorzugsweise alle Profilstangen, in Richtung der Montageplatte (1) weisen (vergl. Abbildung 1).

Diese Ausführungsform zeichnet sich insbesondere durch ihre geringe Höhe aus.

Montageplatte (1) ist mit der Rahmenkonstruktion (2) in einer solchen Weise verbunden, dass zwischen diese keine Flüssigkeit eindringen kann. Dieses kann auf beliebige Weise erfolgen, beispielsweise durch das Vorsehen von Dichtungen, ganz besonders bevorzugt aber durch durchgehendes Verschweißen von Montageplatte (1) mit den äußeren Profilstangen der Rahmenkonstruktion (2).

In einer bevorzugten Ausführungsform ist zusätzlich eine durchgehende Bodenplatte (4) vorgesehen. Diese ist mit der Rahmenkonstruktion (2) auf der von der Montageplatte (1) abgewandten Seite in einer solchen Weise verbunden, dass keine Flüssigkeit zwischen Bodenplatte (4) und Rahmenkonstruktion (2) eindringen kann.

Ganz besonders bevorzugt ist ein Grundrahmen, bei dem der durch Rahmenkonstruktion (2), Montageplatte (1) und Bodenplatte (4) umschlossene Raum flüssigkeitsdicht gegenüber der Umgebung abgeschlossen ist.

Der erfindungsgemäße Grundrahmen kann weitere Funktionselemente aufweisen, beispielsweise Füße, die vorzugsweise verstellbar und gekapselt sind. Vorzugsweise werden alle Gewindeteile der verstellbaren Füße durch eine abdichtende Gewindehülse verschlossen, wobei der obere Teil komplett geschlossen ist und der untere, verstellbare Bereich durch ein Dichtungselement, beispielsweise einen O-Ring, abgedichtet wird.

Der erfindungsgemäße Grundrahmen lässt sich zur Montage beliebiger Vorrichtungen einsetzen, die vorzugsweise unter Sterilbedingungen zum Einsatz kommen. Beispiele dafür sind Abfüllmaschinen, Antriebe, Mischer und Schneckenförderer. Ganz besonders bevorzugt wird der Grundrahmen zur Montage von Pumpen eingesetzt.

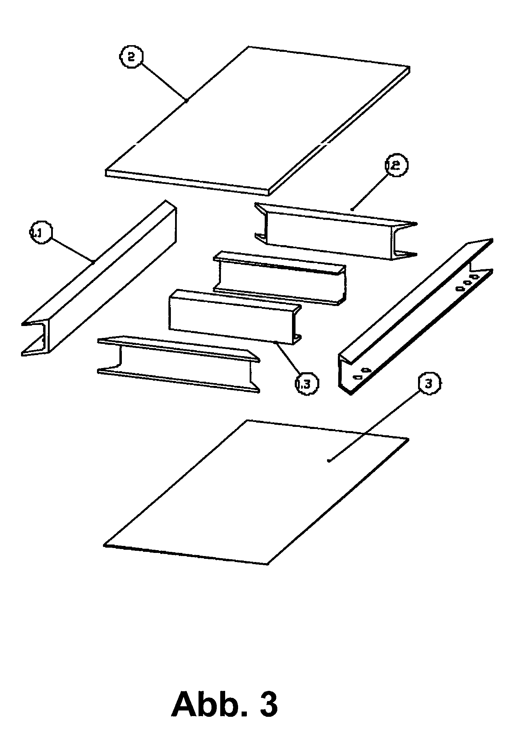

Abbildungen 1 und 2 beschreiben Ausführungsformen des erfindungsgemäßen Grundrahmens mit montierter Pumpe jeweils in Ansicht von der Längs- bzw. Querseite her (Abbildungen 1a und 1b bzw. 2a und 2b). Abbildung 3 zeigt die Ausführungsform des Grundrahmens nach Abbildung 2 in Explosionsdarstellung. Eine Begrenzung ist dadurch nicht beabsichtigt.

Abbildung 1 zeigt die volltragende und durchgehend ebene Montageplatte (1), die aus verschiedenen Profilstangen (3) gebildete Rahmenkonstruktion (2) sowie eine durchgehende Bodenplatte (4). In der dargestellten Ausführungsform werden U-Profile eingesetzt, bei denen die Schenkel des U-Profils der den äußeren Rahmen bildenden Profilstangen nach außen weisen.

Die den äußeren Rand bildenden Profilstangen (3) sind auf Gehrung geschnitten und werden miteinander sowie mit den inneren Profilstangen verschweißt.

Nach der Herstellung der Rahmenkonstruktion (2) werden Montageplatte (1) und Bodenplatte (4) mit dieser flüssigkeitsdicht verschweißt.

Einige der den äußeren Rand bildenden Profilstangen (3) weisen Bohrungen zur Aufnahme von verstellbaren Füßen (5) auf. Auf der Montageplatte (1) ist eine Pumpe (6) mit Motor (7) verschraubt.

Die Ausführungsform des Grundrahmens nach Abbildungen 2a und 2b gleicht derjenigen der Abbildungen 1a und 1b mit der Abänderung, dass die die Rahmenkonstruktion (2) bildenden Profilstangen (3) U-Profile besitzen, bei denen die Schenkel des U-Profils der den äußeren Rahmen bildenden Profilstangen nach oben, d.h. in Richtung der Montageplatte (1), weisen.

Abbildung 3 zeigt die Ausführungsform nach Abbildungen 1a und 1b in Explosionsdarstellung. Neben der volltragenden und durchgehenden ebenen Montageplatte (1) sind die aus verschiedenen Profilstangen (3) gebildete Rahmenkonstruktion (2) sowie die durchgehende Bodenplatte (4) zu erkennen.

## Patentansprüche

1. Grundrahmen umfassend
a) eine volltragende und durchgehend ebene Montageplatte (1), und
b) eine Rahmenkonstruktion (2) aus miteinander verbundenen Profilstangen (3), deren Abmessung in etwa der Abmessung der Montageplatte (1) entspricht, wobei
c) die Montageplatte (1) mit der Rahmenkonstruktion (2) in einer solchen Weise verbunden ist, dass keine Flüssigkeit zwischen Montagepiatte (1) und Rahmenkonstruktion (2) eindringen kann.

2. Grundrahmen nach Anspruch 1, **dadurch gekennzeichnet, daß** zusätzlich eine durchgehende Bodenplatte (4) vorgesehen ist, die
d) mit der Rahmenkonstruktion (2) auf der von der Montageplatte (1) abgewandten Seite in einer solchen Weise verbunden ist, dass keine Flüssigkeit zwischen Bodenplatte (4) und Rahmenkonstruktion (2) eindringen kann.

3. Grundrahmen nach Anspruch 2, **dadurch gekennzeichnet, daß** der durch Rahmenkonstruktion (2), Montageplatte (1) und Bodenplatte (4) umschlossene Raum flüssigkeitsdicht gegenüber der Umgebung abgeschlossen ist.

4. Grundrahmen nach Anspruch 1, **dadurch gekennzeichnet, dass** die die Rahmenkonstruktion (2) bildenden Profilstangen ein U-Profil aufweisen.

5. Grundrahmen nach Anspruch 4, **dadurch gekennzeichnet, dass** die Schenkel des U-Profils der den äußeren Rahmen bildenden Profilstangen nach außen weisen.

6. Grundrahmen nach Anspruch 4, **dadurch gekennzeichnet, dass** die Schenkel des U-Profils zumindest der den äußeren Rahmen bildenden Profilstangen, vorzugsweise alle Profilstangen, in Richtung der Montageplatte (1) weisen.

7. Grundrahmen nach Anspruch 1, **dadurch gekennzeichnet, dass** die den äußeren Rahmen bildenden Profilstangen der Rahmenkonstruktion (2) mit der Montageplatte (1) flüssigkeitsdicht verschweißt sind.

8. Verwendung des Grundrahmens nach Anspruch 1 als Pumpenrahmen.
